Europäisches Patentamt

European Patent Office

Office européen des brevets

(19)

(11) Veröffentlichungsnummer: **0 327 915**

**A1**

(12) # EUROPÄISCHE PATENTANMELDUNG

(21) Anmeldenummer: **89101541.4**

(22) Anmeldetag: **30.01.89**

(51) Int. Cl.⁴: **F16D 3/44 , F16D 3/26**

(30) Priorität: **12.02.88 AT 324/88**

(43) Veröffentlichungstag der Anmeldung:
**16.08.89 Patentblatt 89/33**

(84) Benannte Vertragsstaaten:
**DE ES FR GB IT NL SE**

(71) Anmelder: **Etablissement Supervis**
**Altenbachstrasse 17**
**FL-9490 Vaduz(LI)**

(72) Erfinder: **Lutz, Christian**
**Im Daneu 25a**
**A-6714 Nüziders(AT)**

(74) Vertreter: **Hefel, Herbert, Dipl.-Ing.**
**Egelseestrasse 65a**
**A-6800 Feldkirch-Tosters(AT)**

(54) Schleifengelenk zur Drehmomentübertragung.

(57) Das Schleifengelenk besitzt einen Zwischenteil
(20) der mit zwei Kupplungsteilen (1, 10) über zylindrische Gelenkzapfen (8, 11) verbunden ist. Der
Zwischenteil (20) besteht aus zwei im wesentlichen
symmetrischen Schalenhälften (19), wobei die Trennebene der beiden Schalenhälften die Achse des
inneren Gelenkzapfens (11) enthält und andererseits
rechtwinklig zur gemeinsamen Achse der äußeren
Gelenkzapfen (8) steht. Am inneren Gelenkzapfen
(11) ist eine Feder abgestützt, die mit ihrem anderen
Ende gegen die Innenseite der Schalenhälften (19)
des Zwischenteiles (20) drückt.

Fig. 12

EP 0 327 915 A1

## Schleifengelenk für Drehmomentübertragung

Die Erfindung bezieht sich auf ein Schleifengelenk zur Drehmomentübertragung nach den Merkmalen des Oberbegriffes des Patentanspruches 1.

Solche Schleifengelenke werden unter anderem eingesetzt bei Lenksäulen für Kraftfahrzeuge, und zwar in Verbindung mit dem Lenkrad. Durch die Anordnung eines solchen Schleifengelenkes zwischen Lenkrad und Lenksäule kann das Lenkrad gekippt werden, was das Ein- bzw. Aussteigen des Fahrzeuges erleichtert. Beim betriebsmäßigen Einsatz des Fahrzeuges wird über dieses Schleifengelenk die Lenkbewegung des Lenkrades über das Lenkgetriebe und das Lenkgestänge übertragen. Um den Komfort der Lenkung sicher zu stellen, darf ein solches Gelenk kein zu großes Spiel aufweisen, und zwar insbesondere in Richtung der Kraftübertragung (Drehmoment), andererseits ist nicht vermeidbar, in einem solchen Gelenk mehrere Lagerstellen vorzusehen, die zwangsweise ein gewisses Minimalspiel benötigen, um sicherzustellen, daß das Gelenk "leicht" sich bewegen läßt. Ist bei einem Gelenk der gegenständlichen Art noch zusätzlich ein funktionswesentlicher Konstruktionsteil aus Kunststoffmaterial gefertigt, so sind nicht unerhebliche Maßänderungen durch Wärmeeinflüsse zu bedenken, da diese Kunststoffe einen relativ großen Wärmedehnungskoeffizienten besitzen, andererseits beim betriebsmäßigen Einsatz des Kraftfahrzeuges doch mit Temperaturdifferenzen von 20° C und mehr gerechnet werden muß.

Ausgehend vom aufgezeigten Stand der Technik liegt der Erfindung nun die Aufgabe zugrunde, ein Gelenk der gegenständlichen Art trotz eventueller Verwendung gleitgünstiger und reibungsarmer Kunststoffmaterialien so auszubilden, daß innerhalb des Gelenkes Vorspannkräfte wirksam werden können, die solche Toleranzen auszugleichen vermögen, unabhängig davon, ob diese Toleranzen fertigungstechnisch oder materialmäßig bedingt sind, was erfindungsgemäß durch jene Maßnahmen gelingt, die Inhalt und Gegenstand des kennzeichnenden Teiles des Patentanspruches 1 sind.

Um die Erfindung zu veranschaulichen, wird ein Ausführungsbeispiel näher erläutert. Es zeigen:

Die. Fig. 1, 2 und 3 den ersten, tulpenförmigen Kupplungsteil in drei Schnittdarstellungen;

die Fig. 4 und 5 den zweiten Kupplungsteil in Ansicht und Seitensicht, zum Teil aufgerissen;

die Fig. 6 und 7 die U-förmige Torsionsfeder in Ansicht und Seitensicht;

die Fig. 8 die Ansicht der Innenseite einer Schalenhälfte;

Fig. 9 die Ansicht der Außenseite der Schalenhälfte;

Fig. 10 einen Querschnitt durch die Schalenhälfte und

Fig. 11 eine Seitensicht;

die Fig. 12, 13 und 14 das Schleifengelenk in drei Schnittdarstellungen und

Fig. 15 eine Prinzipskizze zur Erläuterung der Funktion.

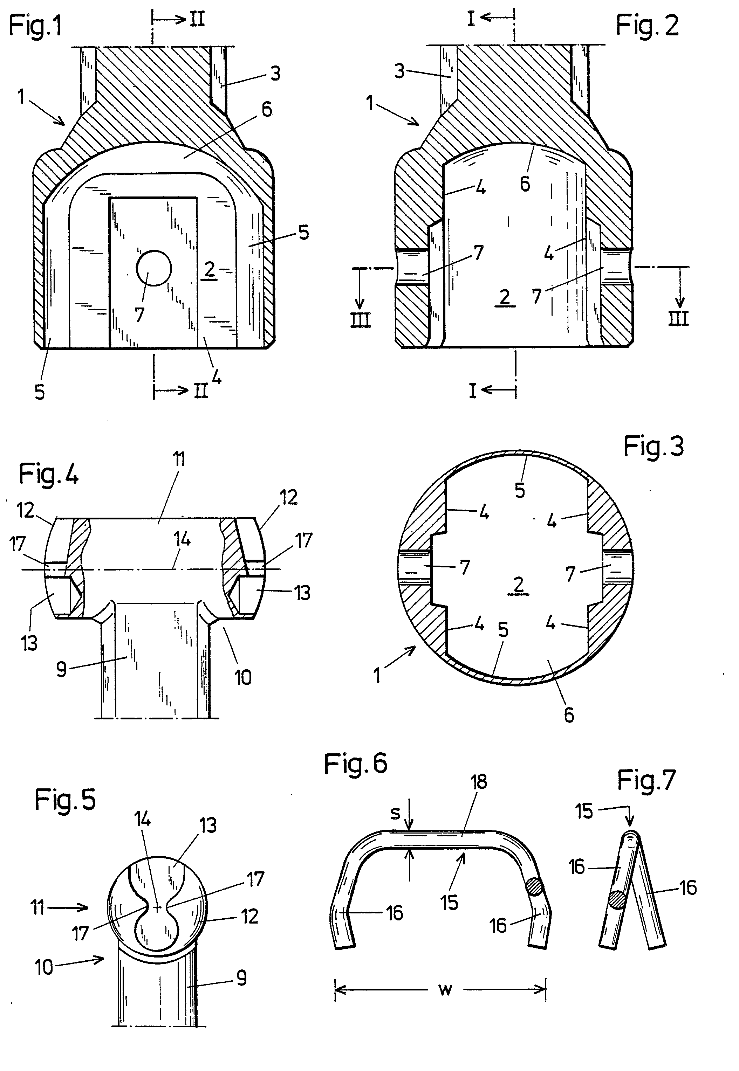

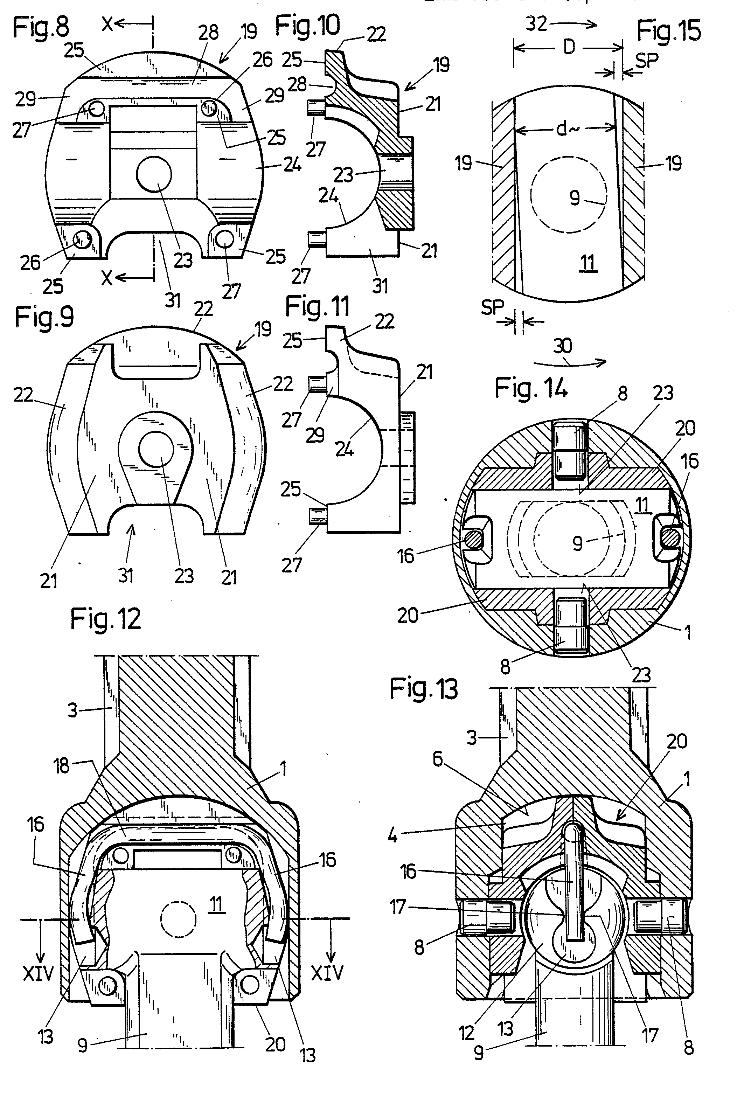

Einleitend werden vorerst die einzelnen Teile des Schleifengelenkes, das in den Fig. 12, 13, 14 in drei Schnittdarstellungen in betriebsbereitem Zustand gezeigt ist, erläutert: Die Fig. 1 und 2 zeigen den ersten tulpenförmigen Kupplungsteil 1 in zwei Längsschnitten, Fig. 3 im Querschnitt, wobei Fig. 1 einen Längsschnitt darstellt nach der Schnittlinie I - I in Fig. 2; Fig. 2 einen Längsschnitt nach der Linie II - II in Fig. 1 und Fig. 3 einen Querschnitt nach der Linie III - III in Fig. 2. Der tulpenförmige Kupplungsteil 1 mit seinem Hohlraum 2 ist mit einem Wellenschaft 3 einstückig ausgebildet. Der Hohlraum 2 ist von parallel zueinander liegenden, diametral zueinander stehenden ebenen Flächen 4 begrenzt, ferner von kreiszylindrischen Flächen 5 und von einer Kugelschalenfläche 6. Im Bereich der ebenen Flächen 4 sind im Kupplungsteil 1 Bohrungen 7 mit fluchtenden Achsen, die für die Aufnahme von äußeren Gelenkzapfen 8 (Fig. 13 und 14) vorgesehen sind.

Der andere, zweite Kupplungsteil 10 (Fig. 4 und Fig. 5) besitzt einen Wellenschaft 9, an dessen Ende, das vom Hohlraum 2 des tulpenförmigen Kupplungsteil 1 aufgenommen wird, ein zylindrischer Gelenkzapfen 11 mit einer Mittelachse 14 vorgesehen ist. Dieser Gelenkzapfen 11 ist der innere Gelenkzapfen und er ist mit dem Wellenschaft 9 einstückig ausgebildet. Die Stirnseiten 12 des inneren Gelenkzapfens 11 sind Kugelschalenflächen und in diesen Stirnflächen 12 ist je eine Ausnehmung 13 ausgespart, wobei diese Ausnehmung 13 in Ansicht (Fig. 5) die Form einer nach oben offenen Acht zeigt. Die in Richtung der Achse 14 gemessene Tiefe dieser Ausnehmung 13 ist mindestens so groß wie die Stärke s der U-förmigen Torsionsfeder 15 (Fig. 6 und Fig. 7).

Für die Anlage der freien Schenkel 16 der Torsionsfeder 15 sind nahe der Achse 14 des inneren Gelenkzapfens 11 paarweise vorgesehene Anlageflächen 17 vorhanden, die durch diese Ausnehmung 13 gebildet sind und welche im wesentlichen parallel zu jener gedachten Ebene stehen, die durch die Achse 14 des inneren Gelenkzapfens 11 und durch die Achse des Wellenschaftes 9 legbar ist. Zweckmäßigerweise sind diese Anlageflächen leicht bombiert. Der unter Abschnitt der in Ansicht als offene Acht ausgebildeten Ausnehmung 13, das ist der Teil, der unter den paarweise angeordneten Anlageflächen 17 liegt, kann gegenüber dem restlichen Teil dieser Ausnehmung 13 etwas vertieft sein, das ist aus Fig. 4 erkennbar.

Die Torsionsfeder 15, von der schon die Rede war, ist in Fig. 6 in Ansicht und in Fig. 7 in Seitensicht gezeigt. Sie ist U-förmig ausgebildet, die beiden freien Schenkel 16 gegeneinander etwas verschränkt (Fig. 7), so daß diese Torsionsfeder 15 in Seitensicht (Fig. 7) eine V-förmige Gestalt zeigt. Die Schenkel 16 sind über einen Mittelteil 18 einstückig aus einem Rundstahldraht gefertigt.

Der Zwischenteil, der die beiden Kupplungsteile 1 und 10 über die Gelenkzapfen 8 und 11 miteinander verbindet, ist aus einem geeigneten Kunststoffmaterial gefertigt, das gegenüber Stahl günstige Gleit-und Reibungseigenschaften aufweist, also einen geringen Reibungskoeffizient besitzt und auch gegebenenfalls noch besondere Notlaufeigenschaften aufweist. Dieser Zwischenteil 20 ist aus zwei gleichen symmetrischen Schalenhälften 19 gebildet. Eine solche Schalenhälfte 19 ist in Fig. 4 von innen gezeigt, in Fig. 9 von außen, Fig. 10 stellt einen Querschnitt dar nach der Schnittlinie X - X in Fig. 8 und Fig. 11 zeigt eine Seitenansicht. Die Außenseite einer jeden Schalenhälfte 19 ist von ebenen Flächen 21 begrenzt und von Kugelschalenflächen 22. Durch die unten vorgesehene Ausnehmung 31 ragt der Wellenschaft 9 des zweiten Kupplungsteiles. Stirnseitig vorgesehene Bohrungen 23 mit fluchtenden Achsen dienen der Aufnahme der äußeren Gelenkzapfen 8. Die mittlere Aussparung 24 nimmt den inneren Gelenkzapfen 11 auf. An der Trennebene 25 der Schalenhälften 19 sind Zentrierbohrungen 26 bzw. Zentrierzapfen 27 in wechselseitigem Versatz angeordnet (Fig. 8), die beim Zusammenfügen der beiden Schalenhälften 19 formschlüssig ineinandergreifen. Oberhalb der mittleren Aussparung 24, die der Aufnahme des inneren Gelenkzapfens 11 dient, ist parallel zu dessen Achse verlaufend eine rinnenartige Vertiefung 28 vorgesehen, deren nach unten auslaufende Endabschnitte 29 (Fig. 8) von oben her in die mittlere Aussparung 24 münden.

Soweit zum Aufbau der einzelnen Teile des Schleifengelenks. Die Fig. 12, 13, 14 zeigen nun das Schleifengelenk betriebsfertig montiert, und zwar in zwei Längsschnitten und in einem Querschnitt, die den Schnittdarstellungen nach den Fig. 1, 2 und 3 entsprechen. Aus diesen Figuren ist nun erkennbar, daß der innere Gelenkzapfen 11 von den beiden Schalenhälften 19 des Zwischenteiles 20 aufgenommen ist, wobei die Torsionsfeder 15 bzw. deren Mittelteil 18 in der erwähnten rinnenartigen Vertiefung 28 liegt, und die Schenkel 16 dieser Torsionsfeder 15 (Fig. 12 und 13) in die stirnseitigen Ausnehmungen 13 am inneren Gelenkzapfen 14 ragen. Die Weite w der U-förmigen Torsionsfeder 15 (Fig. 6) ist so bemessen, daß sie die äußere Umfangskontur der Schalenhälfte 19 bzw. des daraus gebildeten Zwischenteiles 20 an keiner Stelle überragt (Fig. 12 bis 14). Die beiden, das Zwischenteil 20 bildenden Schalenhälften 19 greifen mit ihren Zentrierbohrungen 26 und Zentrierzapfen 27 formschlüssig ineinander und die Schalenhälften 19 werden durch die ebenen Flächen 4 des tulpenförmigen Kupplungsteiles 1 zusammengehalten (Fig. 13 und Fig. 14), wobei ihre Lage innerhalb des Hohlraumes 2 des Kupplungsteiles 1 durch die äußeren Gelenkzapfen 8 gesichert ist, die in die Bohrungen 7 eingepreßt sind.

Die Schränkung der Torsionsfeder 15, deren Mittelteil 18 in der rinnenartigen Vertiefung 28 des Zwischenteiles 20 eingespannt ist, bewirkt nun, daß der innere Gelenkzapfen 11 in der mittleren Aussparung 24 des Zwischenteiles 20 um das zwischen diesen Konstruktionsteilen vorhandene Differenzmaß schräggestellt ist. Dieses Differenzmaß ist an sich sehr klein und aus den Figuren auch nicht so ohne weiteres erkennbar. Zu dessen Veranschaulichung dient nun die Fig. 15, die sozusagen einer Schnittdarstellung nach der Fig. 14 entspricht, wobei jedoch die Abmessungen der Konstruktionsteile nicht mehr maßstabgerecht sind, um das Gesagte zu veranschaulichen: Der Durchmesser D der durch die mittleren Aussparung 24 der Schalenhälften 19 gebildeten Aufnahmebohrung für den inneren Gelenkzapfen 11 ist größer als der Durchmesser d des inneren Gelenkzapfens 11. Die verschränkte, U-förmige Torsionsfeder 15 bewirkt nun, daß der innere Gelenkzapfen 11 in seiner Aufnahmebohrung schräggestellt ist (Fig. 15), und zwar in der Ebene, die rechtwinkelig zur Achse des Wellenschaftes 9 steht, und zwar unabhängig von der jeweiligen Winkelstellung des Zwischenteiles 20 gegenüber diesem Wellenschaft. Wird nun beim betriebsmäßigen Einsatz der Kupplungsteil 10 innerhalb des Gelenkes in Richtung des Pfeiles 30 gedreht, so ist zwischen den beiden Teilen 19 und 11 eine spielfreie kraftübertragende Verbindung vorhanden, da infolge der Wirkung der verschränkten Feder 15 in dieser Drehrichtung (Pfeil 30) der Gelenkzapfen 11 an der Laibungswand seiner Aufnahmebohrung anliegt, was deutlich Fig. 15 veranschaulicht. Wird hingegen die Drehrichtung umgekehrt (Pfeil 32 - Fig. 5), so muß nun vorerst gegen die Wirkung der Torsionsfeder 15 das Spiel SP überwunden werden, bis die kraftübertragenden Flächen wieder aneinander anliegen. Die Feder 15 bzw. deren Härte ist dabei so bemessen, daß für den, der diese Schleifenkupplung betriebsmäßig nutzt, diese Überbrückung des Spiels gegen die Wirkung dieser Feder nicht bemerkbar ist.

Ist beim vorstehend im Detail erläuterten Ausführungsbeispiel eine U-förmige, verschränkte Torsionsfeder 15 in der erläuterten Weise vorgesehen, so ist es denkbar, das konstruktiv und fertigungstechnisch bedingte Spiel zwischen den erläuterten Teilen auch in anderer Weise durch Federkraft zu überbrücken. Beispielsweise könnte im mittleren Bereich des inneren Gelenkzapfens 1 eine Sackbohrung vorgesehen sein, die eine Feder aufnimmt und ein nach außen wirkendes Druckstück, wobei die Achse dieser Bohrung im wesentlichen in der Ebene liegt, die durch die Achse 14 des Gelenkzapfens legbar ist und die rechtwinkelig zur Achse des Wellenschaftes 9 steht. In diesem Fall muß bei jeder Drehrichtung ein Spiel gegen die Federkraft überwunden werden. Es ist aber auch denkbar, solche Bohrungen sowie Federn und Druckbolzen in den Endabschnitten des inneren Gelenkzapfens 11 anzuordnen, und zwar in der erwähnten Ebene, wobei jedoch an den beiden Endabschnitten des Gelenkzapfens 11 diese Bohrungen seitenversetzt zueinander liegen, so daß ihre Wirkung jene Stellung der Konstruktionsteile zueinander erzwingt, die in Fig. 15 schematisch dargestellt ist. Dieser letzterwähnte Konstruktionsvorschlag erscheint jedoch weniger vorteilhaft als das erstbesprochene Ausführungsbeispiel, dies deswegen, da die Druckbolzen bei diesen Konstruktionen an der Lagerwand anliegt, die durch die mittlere Aussparung 24 des Zwischenteiles 20 gebildet wird, und diese Druckbolzen gegenüber dieser Wand noch relativ bewegt werden müssen.

Dank des erfindungsgemäßen Vorschlages wird das konstruktiv und materialmäßig bedingte Spiel zwischen den besprochenen Konstruktionsteilen in der einen Drehrichtung vollständig aufgehoben, so daß die kraftübertragenden Flächen aneinander stets anliegen, in der anderen Drehrichtung jedoch das vorhandene Spiel SP (Fig. 15) gegen die Wirkung der vorgespannten Feder 15 überwunden werden muß, wobei die Federkraft so gewählt werden kann, daß für den Benutzer dieser Einrichtung diese Überbrückung des Spieles nicht spürbar wird.

Für den Zwischenteil 20 bzw. die diesen Zwischenteil 20 bildenden Schalenhälften 19 bietet sich Kunststoff als Fertigungsmaterial an, insbesondere ein solcher, der günstige Gleit- und Reibungseigenschaften besitzt. Die Erfindung schließt aber nicht aus, daß diese Schalenhälften auch aus Metall gefertigt werden.

Die äußeren Gelenkzapfen 8 können im Vergleich zum inneren Gelenkzapfen 11 einen sehr kleinen Durchmesser haben, da ihnen nur die Aufgabe obliegt, den Zusammenhalt der Teile zu sichern. Die Kräfte aus dem Drehmoment, die das Gelenk zu übertragen hat, belasten aufgrund der hier gewählten Konstruktion diese äußeren Zapfen nicht. Hingegen gestattet die erfindungsgemäße Konstruktion, den inneren Gelenkzapfen 11 mit einem relativ großen Durchmesser auszustatten, der ja beim betriebsmäßigen Einsatz des Gelenkes hoch belastet ist.

In diesem Zusammenhang ist noch auf das Gelenk nach der US-PS 4 135 372 zu verweisen, welches zur Übertragung von Drehmomenten dient und welches zur Kompensation des Torsionsspieles Maßnahmen vorsieht. Hier ist das Zwischenstück ebenfalls zweischalig ausgebildet. Die beiden Schalenhälften liegen jedoch bei dieser Konstruktion mit ihrer Trennebene nicht unmittelbar aneinander an, sondern sparen einen sogenannten Klemmspalt zwischen sich aus, der so dimensioniert sein muß, daß er auch imstande ist, den durch Materialabtrag bedingten Verschleiß auszugleichen. Außen liegen an diesen Schalen des Zwischenstückes gewellte scheibenartige Federn an, die von den äußeren Gelenkzapfen durchsetzt sind und die sich an der Innenseite des gabelartigen äußeren Kupplungsteiles abstützen. Diese scheibenartigen Federn haben auch die Aufgabe, die äußeren Gelenkzapfen in ihrer axialen Lage zu sichern. Durch diese notwendigerweise bedingte Verspannung der Federn wird deren Federcharakteristik erheblich beeinträchtigt, so daß keine eindeutigen Verhältnisse hier in diesem Kupplungsteil vorliegen. Darüberhinaus muß zwischen den Schalenhälften des Zwischenstückes und diesen Federscheiben eine Zwischenscheibe oder Beilagscheibe vorgesehen sein, um zu verhindern, daß sich die gewellte Scheibe in das Material der Schalenhälfte des Zwischenstückes eingräbt. Ferner ist hier zu beachten, daß es kaum möglich ist, die Montage der einzelnen Elemente zu automatisieren, da bei der Montage dieser Kupplung bzw. dieses Gelenkes sowohl die erwähnten Beilagscheiben wie auch die Scheibenfedern gegenüber den Gelenkzapfen positioniert werden müßten, was bei dieser Konstruktion mit wirtschaftlichem Aufwand nicht machbar ist. Es ist daher nicht möglich, mit wirtschaftlich tragbarem Aufwand die Montage dieses Gelenkes zu automatisieren.

Legende zu den Hinweisziffern

1 Kupplungsteil
2 Hohlraum
3 Wellenschaft
4 ebene Fläche
5 kreiszylindrische Fläche
6 Kugelschalenfläche
7 Bohrung
8 äußerer Gelenkzapfen
9 Wellenschaft
10 Kupplungsteil
11 innerer Gelenkzapfen

12 Stirnseite
13 Ausnehmung
14 Achse
15 U-förmige Torsionsfeder
16 Schenkel
17 Anlagefläche
18 Mittelteil
19 Schalenhälfte
20 Zwischenteil
21 ebene Fläche
22 Kugelschalenfläche
23 Bohrung
24 mittlere Aussparung
25 Trennebene
26 Zentrierbohrung
27 Zentrierzapfen
28 rinnenartige Vertiefung
29 Endabschnitt
30 Pfeil
31 Ausnehmung
32 Pfeil

**Ansprüche**

1. Schleifengelenk zur Drehmomentübertragung mit einem ersten tulpenförmigen Kupplungsteil (1) und mit einem zweiten Kupplungsteil (10), dessen Ende schwenkbar in eine Ausnehmung eines im tulpenförmigen Kupplungsteil (1) schwenkbar gelagerten, vorzugsweise aus Kunststoff gefertigten Zwischenteil (20) eingreift, der mit beiden Kupplungsteilen (1, 2) über zylindrische Gelenkzapfen (8, 11) verbunden ist, wobei der eine, innere Gelenkzapfen (11) quer am Ende des zweiten Kupplungsteiles (10) vorgesehen ist und in einer Lagerbohrung (24) des Zwischenteiles (20) verdrehbar aufgenommen ist und an einander diametralen Seiten des tulpenförmigen Kupplungsteiles (1) äußere Gelenkzapfen (8) fluchtend angeordnet sind, deren gemeinsame Achse die Achse (14) des inneren Gelenkzapfens (11) rechtwinkelig schneidet und die ebenfalls in Lagerbohrungen (7) des Zwischenteiles (20) verdrehbar aufgenommen sind und ferner die innere Wandung des tulpenförmigen Kupplungsteiles (1) in dem die äußeren Gelenkzapfen (8) tragenden Bereich von im wesentlichen ebenen Flächen (4) gebildet ist, an welchen ebenfalls im wesentlichen ebene Flächen (21) des Zwischenteiles (20) anliegen, dadurch gekennzeichnet, daß der Zwischenteil (20) aus zwei im wesentlichen symmetrischen Schalenhälften (19) besteht, wobei die Trennebene (25) dieser beiden Schalenhälften (19) einerseits die Achse (14) des inneren Gelenkzapfens (11) enthält bzw. dieser unmittelbar benachbart ist und andererseits rechtwinkelig zur gemeinsamen Achse der äußeren Gelenkzapfen (8) steht und am inneren Gelenkzapfen (11) mindestens eine Feder (15) abgestützt ist, die mit ihrem anderen Ende gegen die Innenseite der Schalenhälften (19) des Zwischenteiles (20) drückt.

2. Schleifengelenk nach Anspruch 1, dadurch gekennzeichnet, daß in den Trennebenen (25) des Zwischenteiles (20) auf der der Aufnahmung (31) für die Aufnahme des zweiten Kupplungsteiles (10) abgewandten Seite je eine rinnenartige, im wesentlichen parallel zur Achse (14) des inneren Gelenkzapfens (11) verlaufende Vertiefung (28) vorgesehen ist, in welcher der Mittelteil (18) einer U-förmigen Torsionsfeder (15) liegt, deren freie Schenkel (16) in Ausnehmungen (13) eingreifen, die in den Stirnseiten (12) des inneren Gelenkzapfens (11) ausgespart sind.

3. Schleifengelenk nach Anspruch 2, dadurch gekennzeichnet, daß die in Richtung der Achse des inneren Gelenkzapfens (11) gemessene Tiefe der Ausnehmung (13) für die Aufnahme der freien Schenkel (16) der U-förmigen Torsionsfeder (15) mindestens so groß, vorzugsweise größer ist als die Stärke (s) der Schenkel (16) dieser Feder (15).

4. Schleifengelenk nach Anspruch 2 oder 3, dadurch gekennzeichnet, daß die für die Anlage der freien Schenkel (16) der Torsionsfeder (15) vorgesehenen und paarweise angeordneten Anlageflächen (17) der stirnseitigen Ausnehmungen (13) nahe der Achse (14) des inneren Gelenkzapfens (11) liegen und im wesentlichen parallel zu jener gedachten Ebene stehen, die durch die Achse (14) des inneren Gelenkzapfens (11) und durch die Achse des Wellenschaftes (9) des zweiten Kupplungsteiles (10) legbar ist.

5. Schleifengelenk nach Anspruch 2, dadurch gekennzeichnet, daß die freien Schenkel (16) der U-förmigen Torsionsfeder (15) gegeneinander verschränkt sind, so daß die U-förmige Torsionsfeder (15) in Seitensicht eine V-Form zeigt (Fig. 7).

6. Schleifengelenk nach Anspruch 1, dadurch gekennzeichnet, daß an den Trennebenen (25) der Schalenhälften (19) des Zwischenteiles (20) Zentrierzapfen (27) und Zentrierbohrungen (26) vorgesehen sind, die bei betriebsmäßig vereinten Schalenhälften (19) zur Bildung des Zwischenteiles (20) formschlüssig ineinandergreifen.

7. Schleifengelenk nach Anspruch 4, dadurch gekennzeichnet, daß die Anlageflächen (17) für die Schenkel (16) der Torsionsfeder (15) bombiert ausgebildet sind.

8. Schleifengelenk nach Anspruch 1, dadurch gekennzeichnet, daß im inneren Gelenkzapfen (11) mindestens eine Bohrung vorgesehen ist, deren Achse im wesentlichen rechtwinklig steht zu einer gedachten Ebene, die durch die Achse (14) des inneren Gelenkzapfens (11) und die Achse des Wellenschaftes (9) des zweiten Kupplungsteiles legbar ist, und diese Bohrung eine Feder und ein Druckglied aufweist.

9. Schleifengelenk nach Anspruch 8, dadurch gekennzeichnet, daß endseitig am inneren Gelenkzapfen (11) je eine Bohrung mit Feder und Druckglied vorgesehen ist und die beiden Bohrungen auf verschiedenen Seiten der gedachten Ebene liegen, die durch die Achse des inneren Gelenkzapfens und die Achse des Wellenschaftes (9) des zweiten Kupplungsteiles legbar ist.

10. Schleifengelenk nach einem der Ansprüche 1 bis 9, dadurch gekennzeichnet, daß der Durchmesser des tulpenförmigen Kupplungsteiles (1) ca. das 2,5 -fache des Durchmessers (d) des inneren Gelenkzapfens (11) beträgt.

11. Schleifengelenk nach Anspruch 1, dadurch gekennzeichnet, daß der Durchmesser der äußeren Gelenkzapfen (8) nur einen Bruchteil des Durchmessers (d) des inneren Gelenkzapfens (11) beträgt.

Etablissement Supervis

Fig.1

Fig. 2

Fig.3

Fig.4

Fig.5

Fig. 6

Fig.7

HE 9446

Etablissement Supervis

Fig.8

Fig.10

Fig.15

Fig.9

Fig.11

Fig.14

Fig.12

Fig.13

Europäisches Patentamt

**EUROPÄISCHER RECHERCHENBERICHT**

Nummer der Anmeldung

EP 89 10 1541

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 560 368 (SHERMAN) * Insgesamt * | 1 | F 16 D 3/44 |
| Y | | 9,10 | F 16 D 3/26 |
| A | | 2 | |
| | --- | | |
| Y | US-A-3 798 925 (MARTUS) * Insgesamt * | 9,10 | |
| A | | 1,6 | |
| | --- | | |
| A | US-A-2 256 624 (ODLUM) * Insgesamt * | 5 | |
| | --- | | |
| D,Y | US-A-4 135 372 (BENSON) * Insgesamt * | 1,6 | |
| | --- | | |
| Y | US-A-3 431 751 (STOKELY) * Insgesamt * | 1,6 | |
| | --- | | |
| A | DE-C- 643 372 (NEJEDLY) * Insgesamt * | 1,6 | |
| | --- | | RECHERCHIERTE SACHGEBIETE (Int. Cl.4) |
| A | FR-A-1 166 141 (COQUILLE) * Insgesamt * | 1,9 | F 16 D 3/00 |
| | --- | | |
| A | GB-A- 502 887 (KRUPP) * Insgesamt * | 1 | |
| | --- | | |
| A | FR-A- 783 141 (SAUSSARD) * Insgesamt * | 1 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 08-05-1989 | BALDWIN D.R. |